(19) Europäisches Patentamt
European Patent Office
Office européen des brevets

(11) EP 4 261 241 A1

(12) EUROPEAN PATENT APPLICATION
published in accordance with Art. 153(4) EPC

(43) Date of publication:
**18.10.2023 Bulletin 2023/42**

(21) Application number: **21903456.8**

(22) Date of filing: **09.12.2021**

(51) International Patent Classification (IPC):
***C08G 59/42*** (2006.01) ***C09J 11/06*** (2006.01)
***C09J 121/00*** (2006.01) ***C09J 123/22*** (2006.01)
***C09J 123/26*** (2006.01) ***C09J 151/04*** (2006.01)
***C09J 151/06*** (2006.01) ***C09J 7/38*** (2018.01)

(52) Cooperative Patent Classification (CPC):
**C08G 59/42; C09J 7/38; C09J 11/06; C09J 121/00; C09J 123/22; C09J 123/26; C09J 151/04; C09J 151/06**

(86) International application number:
**PCT/JP2021/045244**

(87) International publication number:
**WO 2022/124357 (16.06.2022 Gazette 2022/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.12.2020 JP 2020204467**

(71) Applicant: **AJINOMOTO CO., INC.**
**Chuo-ku**
**Tokyo 104-8315 (JP)**

(72) Inventors:
- **NATORI, Naoki**
  **Kawasaki-shi, Kanagawa 210-0801 (JP)**
- **HOSOI, Mai**
  **Kawasaki-shi, Kanagawa 210-0801 (JP)**

(74) Representative: **Mewburn Ellis LLP**
**Aurora Building**
**Counterslip**
**Bristol BS1 6BX (GB)**

# (54) PRESSURE-SENSITIVE ADHESIVE COMPOSITION AND PRESSURE-SENSITIVE ADHESIVE SHEET

(57) An adhesive composition containing (A) an isobutene-based polymer having a crosslinked structure formed by a reaction between an epoxy group, and an acid anhydride group and/or a carboxy group, and (B) at least one selected from the group consisting of an alkoxide with a divalent or higher metal as the central metal, a carboxylate with a divalent or higher metal as the central metal, and a chelate compound with a divalent or higher metal as the central metal, wherein the isobutene-based polymer has, as a side chain, a polymer chain containing a constitutional unit derived from an alkyl (meth)acrylate with an alkyl group having not less than 6 carbon atoms is provided by the present invention.



Processed by Luminess, 75001 PARIS (FR)

## Description

[Technical Field]

The present invention relates to adhesive compositions and adhesive sheets.

[Background Art]

In order to produce soft and foldable flexible electronic devices, laminates obtained by laminating a plurality of films or sheets are used. Laminates used in the production of flexible electronic devices are required to show ability to suppress the occurrence of delamination or floating even when flexed (i.e., superior flexure resistance), in addition to the durability required in the production of conventional electronic devices. Therefore, the adhesive composition used to form the aforementioned laminate is required to have superior adhesiveness and flexure resistance.

For example, as a sealing material useful for producing flexible electronic devices, Patent Literature 1 discloses a sealing composition containing a polyolefin-based resin and/or a polyolefin-based rubber, an inorganic filler, and a metal complex in which a bidentate ligand whose two coordinating atoms are both oxygen atoms and a monodentate ligand whose coordinating atom is an oxygen atom are bonded to the central metal.

[Citation List]

[Patent Literature]

[PTL 1]
WO 2019/189723

[Summary of Invention]

[Technical Problem]

Polyimide is often used as a part of a laminate constituting a flexible electronic device. Therefore, an adhesive composition superior in adhesiveness to polyimide (particularly, adhesiveness at a high temperature) and flexure resistance is demanded.

The present invention has been made by noting the above-mentioned situation, and aims to provide an adhesive composition superior in adhesiveness and flexure resistance (particularly, adhesiveness to polyimide at a high temperature and flexure resistance).

[Solution to Problem]

The present invention capable of achieving the aforementioned purpose is as follows.

[1] An adhesive composition comprising

(A) an isobutene-based polymer having a crosslinked structure formed by a reaction between an epoxy group, and an acid anhydride group and/or a carboxy group, and
(B) at least one selected from the group consisting of an alkoxide with a divalent or higher metal as the central metal, a carboxylate with a divalent or higher metal as the central metal, and a chelate compound with a divalent or higher metal as the central metal, wherein
the aforementioned isobutene-based polymer has, as a side chain, a polymer chain comprising a constitutional unit derived from an alkyl (meth)acrylate with an alkyl group having not less than 6 carbon atoms.

[2] The adhesive composition of the aforementioned [1], wherein a concentration of the constitutional unit derived from the alkyl (meth)acrylate with an alkyl group having not less than 6 carbon atoms in the aforementioned isobutene-based polymer is 0.005 to 5 mmol/g.
[3] The adhesive composition of the aforementioned [1] or [2], wherein the aforementioned isobutene-based polymer is at least one selected from the group consisting of

(a1) a reaction product of an isobutene-isoprene copolymer having an epoxy group, and an olefin-based polymer having an acid anhydride group and/or a carboxy group, and

(a2) a reaction product of an isobutene-isoprene copolymer having an acid anhydride group and/or a carboxy group, and an olefin-based polymer having an epoxy group, and
at least one of the aforementioned isobutene-isoprene copolymer and the aforementioned olefin-based polymer has, as a side chain, a polymer chain comprising a constitutional unit derived from an alkyl (meth)acrylate with an alkyl group having not less than 6 carbon atoms.

[4] The adhesive composition of any one of the aforementioned [1] to [3], wherein the divalent or higher metal is a metal of group 4 of the periodic table or a metal of group 13 of the periodic table.
[5] The adhesive composition of any one of the aforementioned [1] to [3], wherein the divalent or higher metal is aluminum, titanium, or zirconium.
[6] The adhesive composition of any one of the aforementioned [1] to [5], further comprising (C) a liquid polyolefin-based resin and/or a liquid rubber.
[7] An adhesive sheet having a laminate structure comprising an adhesive composition layer formed from the adhesive composition of any one of the aforementioned [1] to [6], and a support.

[Advantageous Effects of Invention]

According to the present invention, an adhesive composition superior the adhesiveness and flexure resistance (particularly, adhesiveness to polyimide at a high temperature and flexure resistance) can be obtained.

[Description of Embodiments]

the adhesive composition of the present invention is characterized in that it contains

(A) an isobutene-based polymer having a crosslinked structure formed by a reaction between an epoxy group, and an acid anhydride group and/or a carboxy group, and
(B) at least one selected from the group consisting of an alkoxide with a divalent or higher metal as the central metal, a carboxylate compound of a divalent or higher metal, and a chelate compound of a divalent or higher metal, wherein

the aforementioned isobutene-based polymer has, as a side chain, a polymer chain comprising a constitutional unit derived from an alkyl (meth)acrylate with an alkyl group having not less than 6 carbon atoms.

In the present specification, the "alkyl (meth)acrylate" means an "alkyl acrylate or alkyl methacrylate". Both alkyl acrylate and alkyl methacrylate may be used.
The carbon number of the alkyl group of the aforementioned "alkyl (meth)acrylate with an alkyl group" is required to be not less than 6 from the aspect of adhesiveness. The carbon number is preferably not less than 7, further preferably not less than 8. While the upper limit of the carbon number is not particularly set, the carbon number is preferably not more than 30, more preferably not more than 24, still more preferably not more than 22, further preferably not more than 20, further more preferably not more than 18, particularly preferably not more than 16, particularly more preferably not more than 14, most preferably not more than 12, from the aspect of lowering the glass transition point of the adhesive composition to be useful in flexible electronic devices. The alkyl group may be a linear or a branched chain.
In the present specification, the "alkyl (meth)acrylate with an alkyl group having not less than 6 carbon atoms" is abbreviated as "long-chain alkyl (meth)acrylate", and the "constitutional unit derived from long-chain alkyl (meth)acrylate" is sometimes to be abbreviated as a "long-chain alkyl (meth)acrylate unit". Also, other constitutional units are sometimes abbreviated similarly.
In the present specification, the "polymer chain containing a long-chain alkyl (meth)acrylate unit" is sometimes to be abbreviated as "long-chain alkyl (meth)acrylate polymer chain", and "isobutene-based polymer having crosslinked structure formed by a reaction between epoxy group and acid anhydride group and/or carboxy group, and a long-chain alkyl (meth)acrylate polymer chain as a side chain" is sometimes to be abbreviated as "a crosslinked isobutene-based polymer with a long-chain alkyl (meth)acrylate polymer chain".
In the present specification, the "crosslinked isobutene-based polymer with a long-chain alkyl (meth)acrylate polymer chain" is sometimes described as "component (A)", and "(B) at least one selected from the group consisting of an alkoxide with a divalent or higher metal as the central metal, a carboxylate compound of a divalent or higher metal, and a chelate compound of a divalent or higher metal" as "component (B) ".
In the present invention, the adhesiveness to polyimide at a high temperature can be improved by using component (A). As the mechanism thereof, it is assumed that the long-chain alkyl (meth)acrylate polymer chain of component (A) improves the cohesive force of component (A), and as a result, the adhesiveness of an adhesive composition containing component (A) is improved. However, the present invention is not limited to such assumed mechanism.

In the present invention, flexure resistance can be improved by using component (A) and component (B) in combination. As the mechanism thereof, it is assumed that a carboxy group and/or a hydroxy group in component (A) formed by the reaction of an epoxy group and an acid anhydride group and/or a carboxy group are/is crosslinked with component (B), whereby the flexure resistance of an adhesive composition containing component (A) and component (B) is improved. However, the present invention is not limited to such assumed mechanism.

The components that can be used in the adhesive composition of the present invention are explained in order. Only one kind of each component may be used or two or more kinds thereof may be used in combination.

<Component (A)>

The adhesive composition of the present invention contains a crosslinked isobutene-based polymer with a long-chain alkyl (meth)acrylate polymer chain (component (A)). The side chain (i.e., long-chain alkyl (meth)acrylate polymer chain) may be formed from a homopolymer, or may be formed from a copolymer. The copolymer may be a block polymer or a random copolymer. The crosslinked structure in component (A) is preferably formed by a reaction of an epoxy group with an acid anhydride group.

Component (A) may contain only one kind of a long-chain alkyl (meth)acrylate unit, or two or more kinds of long-chain alkyl (meth)acrylate units. Examples of the long-chain alkyl (meth)acrylate include 2-ethylhexyl (meth)acrylate, octyl (meth)acrylate, nonyl (meth)acrylate, decyl (meth)acrylate, undecyl (meth)acrylate, dodecyl (meth)acrylate (alias: lauryl (meth)acrylate), and the like. Among these, 2-ethylhexyl (meth)acrylate and lauryl (meth)acrylate is preferred, and 2-ethylhexyl acrylate and lauryl methacrylate are more preferred.

The concentration of the long-chain alkyl (meth)acrylate unit in component (A) is preferably 0.005 to 5 mmol/g, more preferably 0.007 to 3 mmol/g, further preferably 0.01 to 1 mmol/g. As used herein, the "concentration of the long-chain alkyl (meth)acrylate unit in component (A)" means an amount of the long-chain alkyl (meth)acrylate unit (mmol) per 1 g of component (A). The concentration of other units means the same. The concentration of the long-chain alkyl (meth)acrylate unit in component (A) can be calculated, for example, from the concentration of the long-chain alkyl (meth)acrylate unit in the material (e.g., below-mentioned isobutene-isoprene copolymer having an epoxy group, and the like) of component (A). The concentration of the long-chain alkyl (meth)acrylate unit in the material of component (A) can be calculated from the amount of monomer used during the synthesis thereof.

In the present specification, the "isobutene-based polymer" means a polymer in which a constitutional unit derived from isobutene (hereinafter sometimes to be abbreviated as "isobutene unit") is the main constitutional unit (that is, the amount of isobutene unit is the largest of all constitutional units). The isobutene-based polymer is preferably an isobutene-isoprene copolymer (i.e., butyl rubber). In the present invention, the amount of the isoprene unit in the isobutene-isoprene copolymer is preferably 0.1 to 20% by mass, more preferably 0.3 to 15% by mass, further 0.5 to 10% by mass, with respect to the total of the isobutene unit and the isoprene unit.

In one embodiment of the present invention (hereinafter referred to as "embodiment (1)"), component (A) is at least one selected from the group consisting of

(a1) a reaction product of an isobutene-isoprene copolymer having an epoxy group, and an olefin-based polymer having an acid anhydride group and/or a carboxy group (hereinafter sometimes to be referred to as "reaction product (a1)"), and

(a2) a reaction product of an isobutene-isoprene copolymer having an acid anhydride group and/or a carboxy group, and an olefin-based polymer having an epoxy group (hereinafter sometimes to be referred to as "reaction product (a2)"), and

at least one of the aforementioned isobutene-isoprene copolymer and the aforementioned olefin-based polymer has, as a side chain, a long-chain alkyl (meth)acrylate polymer chain.

In the present specification, the "olefin-based polymer" means a polymer in which a constitutional unit derived from olefin (hereinafter sometimes to be abbreviated as "olefin unit") is the main constitutional unit (that is, the amount of olefin unit is the largest of all constitutional units).

As the olefin, a monoolefin having one olefinic carbon-carbon double bond and/or a diolefin having two olefinic carbon-carbon double bonds are/is preferred. Examples of the monoolefin include $\alpha$-olefins such as ethylene, propylene, 1-butene, isobutene (isobutylene), 1-pentene, 1-hexene, 1-heptene, 1-octene, and the like. Examples of the diolefin include 1,3-butadiene, isoprene, 1,3-pentadiene, 2,3-dimethylbutadiene, and the like.

The olefin-based polymer may be a homopolymer or a copolymer. The copolymer may be a random copolymer or a block copolymer. The olefin-based polymer may be a copolymer of olefin and a monomer other than olefin.

In embodiment (1), only one kind each of the aforementioned isobutene-isoprene copolymer and the aforementioned olefin-based polymer may be used or two or more kinds thereof may be used in combination.

In embodiment (1), the acid anhydride group and/or the carboxy group are/is preferably acid anhydride group(s). In embodiment (1), the olefin-based polymer is preferably an isobutene-based polymer, more preferably an isobutene-isoprene copolymer (i.e., butyl rubber).

In embodiment (1), the concentration of epoxy group in the isobutene-isoprene copolymer having an epoxy group and the concentration of epoxy group in the olefin-based polymer having an epoxy group are each independently preferably 0.01 to 10 mmol/g, more preferably 0.05 to 5 mmol/g. The epoxy group concentration is determined from the epoxy equivalent obtained based on JIS K 7236-1995.

In embodiment (1), the concentration of acid anhydride group in the isobutene-isoprene copolymer having an acid anhydride group, and the concentration of acid anhydride group in the olefin-based polymer having an acid anhydride group are each independently preferably 0.01 to 10 mmol/g, more preferably 0.05 to 5 mmol/g. The concentration of acid anhydride group is determined from the acid value defined as the number of milligrams of potassium hydroxide necessary for neutralizing the acid present in 1 g of resin, according to the description of JIS K 2501.

In embodiment (1), the concentration of carboxy group in the isobutene-isoprene copolymer having a carboxy group, and the concentration of carboxy group in the olefin-based polymer having a carboxy group are each independently preferably 0.01 to 10 mmol/g, more preferably 0.05 to 5 mmol/g. The concentration of carboxy group is determined from the acid value defined as the number of milligrams of potassium hydroxide necessary for neutralizing the acid present in 1 g of resin, according to the description of JIS K 2501.

In embodiment (1), a total of the concentration of acid anhydride group and the concentration of carboxy group in the isobutene-isoprene copolymer having an acid anhydride group and a carboxy group (i.e., "acid anhydride group concentration+carboxy group concentration"), and a total of the concentration of acid anhydride group and the concentration of carboxy group in the olefin-based polymer having an acid anhydride group and a carboxy group are each independently preferably 0.01 to 10 mmol/g, more preferably 0.05 to 5 mmol/g.

In embodiment (1), the number average molecular weight (hereinafter sometimes to be referred to as "Mn") of the isobutene-isoprene copolymer having an epoxy group, Mn of the olefin-based polymer having an acid anhydride group and/or a carboxy group, Mn of the isobutene-isoprene copolymer having an acid anhydride group and/or a carboxy group, and Mn of the olefin-based polymer having an epoxy group are each independently preferably 1,000 to 1,000,000, more preferably 20,000 to 500,000, further preferably 50,000 to 500,000. In the present specification, Mn is a value measured by a gel permeation chromatography (GPC) method (based on polystyrene). Specifically, the number average molecular weight by the GPC method can be measured using "LC-9A/RID-6A" manufactured by Shimadzu Corporation as a measuring apparatus, "Shodex K-800P/K-804L/K-804L" manufactured by Showa Denko K.K. as a column, and toluene or the like as a mobile phase at a column temperature of 40°C, and calculated using a standard polystyrene calibration curve.

In embodiment (1), the amount of the isoprene unit in component (A) is preferably 0.1 to 20% by mass, more preferably 0.3 to 15% by mass, further 0.5 to 10% by mass, with respect to the total of the isobutene unit and the isoprene unit.

The ratio of the amount of the epoxy group (mol) in the isobutene-isoprene copolymer having an epoxy group and the amount of the acid anhydride group (mol) in the olefin-based polymer having an acid anhydride group, which is used to form reaction product (a1) (i.e., "amount of epoxy group (mol):amount of acid anhydride group (mol)") is preferably 100:20 to 100:1,000, more preferably 100:30 to 100:400, further preferably 100:50 to 100:300.

The ratio of the amount of the epoxy group (mol) in the isobutene-isoprene copolymer having an epoxy group and the amount of the acid anhydride group (mol) in the olefin-based polymer having a carboxy group, which is used to form reaction product (a1) (i.e., "amount of epoxy group (mol):amount of carboxy group (mol)") is preferably 100:20 to 100:1,000, more preferably 100:30 to 100:400, further preferably 100:50 to 100:300.

The ratio of the amount of the epoxy group (mol) in the isobutene-isoprene copolymer having an epoxy group and the total of the amount of the acid anhydride group (mol) and the amount of the carboxy group (mol) in the olefin-based polymer having a carboxy group and an acid anhydride group, which is used to form reaction product (a1) (i.e., "amount of epoxy group (mol):(amount of acid anhydride group (mol)+amount of carboxy group (mol))") is preferably 100:20 to 100:1,000, more preferably 100:30 to 100:400, further preferably 100:50 to 100:300.

The "amount of epoxy group (mol):amount of acid anhydride group (mol)" to form reaction product (a2) is the same as the corresponding preferable range explained for reaction product (a1) (i.e., "amount of epoxy group (mol):amount of acid anhydride group (mol)" for forming reaction product (a1)). Preferable ranges of the "amount of epoxy group (mol):amount of carboxy group (mol)") and the "amount of epoxy group (mol):(amount of acid anhydride group (mol)+amount of carboxy group (mol))", which are used to form reaction product (a2), are also respectively the same as the corresponding preferable ranges explained for reaction product (a1).

In one embodiment of the present invention (hereinafter to be referred to as "embodiment (2)"), component (A) is at least one selected from the group consisting of

(a3) a reaction product of an isobutene-isoprene copolymer having an epoxy group and a polymer chain containing a long-chain alkyl (meth)acrylate unit as a side chain, and an olefin-based polymer having an acid anhydride group and/or a carboxy group (hereinafter sometimes to be referred to as "reaction product (a3)"),
(a4) a reaction product of an isobutene-isoprene copolymer having an acid anhydride group and/or a carboxy group, as well as a polymer chain containing a long-chain alkyl (meth)acrylate unit as a side chain, and an olefin-based polymer having an epoxy group (hereinafter sometimes to be referred to as "reaction product (a4)"), and
(a5) a reaction product of an isobutene-isoprene copolymer having an epoxy group and a polymer chain containing a long-chain alkyl (meth)acrylate unit as a side chain, and an isobutene-isoprene copolymer having an acid anhydride group and/or a carboxy group, as well as a polymer chain containing a long-chain alkyl (meth)acrylate unit as a side chain (hereinafter sometimes to be referred to as "reaction product (a5)") .

In embodiment (2), only one kind each of the aforementioned isobutene-isoprene copolymer and the aforementioned olefin-based polymer may be used, or two or more kinds thereof may be used in combination.
In embodiment (2), component (A) is preferably at least one selected from the group consisting of reaction product (a3) and reaction product (a4). In embodiment (2), the acid anhydride group and/or the carboxy group are/is preferably acid anhydride group(s). In embodiment (2), the olefin-based polymer is preferably an isobutene-based polymer, more preferably an isobutene-isoprene copolymer (i.e., butyl rubber).
In embodiment (2), preferable ranges and the like of

(i) "concentration of epoxy group", "concentration of acid anhydride group", "concentration of carboxy group" and "total of concentration of acid anhydride group and concentration of carboxy group" in each polymer to form reaction product (a3), reaction product (a4), and reaction product (a5),
(ii) Mn of each polymer,
(iii) amount of isoprene unit in component (A), and
(iv) "amount of epoxy group (mol):amount of acid anhydride group (mol)", "amount of epoxy group (mol):amount of carboxy group (mol)", and "amount of epoxy group (mol):(amount of acid anhydride group (mol)+amount of carboxy group (mol))" to form reaction product (a3), reaction product (a4), and reaction product (a5) are respectively the same as the corresponding preferable ranges explained for embodiment (1) or reaction product (a1).

Examples of the isobutene-isoprene copolymer having an epoxy group and a polymer chain containing a long-chain alkyl (meth)acrylate unit as a side chain include butyl rubbers (i.e., isobutene-isoprene copolymers) modified with a copolymer of an epoxy group-containing unsaturated compound and a long-chain alkyl (meth)acrylate, and the like. As used herein, the "butyl rubber modified with a copolymer" means a "butyl rubber having the aforementioned copolymer chain as a side chain". The "butyl rubber modified with a copolymer" and the like are sometimes to be referred to as a "copolymer-modified butyl rubber" and the like in the present specification. Examples of the epoxy group-containing unsaturated compound include glycidyl (meth)acrylate, 4-hydroxybutyl acrylate glycidyl ether, allyl glycidyl ether, and the like. Only one kind of the epoxy group-containing unsaturated compound may be used, or two or more kinds thereof may be used in combination. The epoxy group-containing unsaturated compound is preferably glycidyl (meth)acrylate.
Examples of the isobutene-isoprene copolymer having an acid anhydride group and/or a carboxy group, as well as a polymer chain containing a long-chain alkyl (meth)acrylate unit as a side chain include butyl rubbers (i.e., isobutene-isoprene copolymers) modified with a copolymer of a carboxylic acid anhydride and a long-chain alkyl (meth)acrylate, and the like. Examples of the carboxylic acid anhydride include succinic anhydride, maleic anhydride, glutaric anhydride, and the like. Only one kind of the carboxylic acid anhydride may be used, or two or more kinds thereof may be used in combination. The carboxylic acid anhydride is preferably maleic anhydride.
The epoxy group-containing unsaturated compound-long-chain alkyl (meth)acrylate copolymer-modified butyl rubber used in embodiment (2) can be produced, for example, by graft addition of a monomer (i.e., epoxy group-containing unsaturated compound and long-chain alkyl (meth)acrylate) or an epoxy group-containing unsaturated compound-long-chain alkyl (meth)acrylate copolymer to a butyl rubber. The carboxylic acid anhydride-long-chain alkyl (meth)acrylate copolymer-modified butyl rubber and the like can also be produced in the same manner. These modified butyl rubber and the like are available from, for example, SEIKO PMC CORPORATION.
An olefin-based polymer having an acid anhydride group and/or a carboxy group (e.g., an isobutene-isoprene copolymer having an acid anhydride group and/or a carboxy group) used in embodiment (1) or (2) can be produced, for example, by graft modification of an olefin-based polymer with an unsaturated compound (e.g., maleic anhydride) having an acid anhydride group and/or a carboxy group under radical reaction conditions.
As an olefin-based polymer having an acid anhydride group and/or a carboxy group used in embodiment (1) or (2), for example, the following are available. Examples of the isobutene-isoprene copolymer having an acid anhydride group and/or a carboxy group include "ER661" (maleic anhydride-butyl methacrylate random copolymer-modified butyl rubber) manufactured by SEIKO PMC CORPORATION, and the like. Examples of the olefin-based polymer having an

acid anhydride group and/or a carboxy group (excluding isobutene-isoprene copolymers) include "HV-300M" (maleic anhydride-modified polybutene) manufactured by TOHO CHEMICAL INDUSTRY COMPANY, "T-YP279" (maleic anhydride-modified propylene-butene random copolymer) manufactured by SEIKO PMC CORPORATION, "T-YP312" (maleic anhydride-modified propylene-butene random copolymer) manufactured by SEIKO PMC CORPORATION, "LUCANT A-5260" (maleic anhydride-modified ethylene-$\alpha$-olefin random copolymer), "LUCANT A-5320" (maleic anhydride-modified ethylene-$\alpha$-olefin random copolymer), which are manufactured by Mitsui Chemicals, Inc., and the like.

An olefin-based polymer having an epoxy group (e.g., an isobutene-isoprene copolymer having an epoxy group) used in embodiment (1) or (2) can be produced by graft modification of an olefin-based polymer with an unsaturated compound having an epoxy group (e.g., glycidyl (meth)acrylate, 4-hydroxybutyl acrylate glycidyl ether, allyl glycidyl ether) under radical reaction conditions.

As an olefin-based polymer having an epoxy group used in embodiment (1) or (2), for example, the following are available. Examples of the isobutene-isoprene copolymer having an epoxy group include "ER866" (glycidyl methacrylate-modified butyl rubber) manufactured by SEIKO PMC CORPORATION, "ER850" (glycidyl methacrylate-modified butyl rubber) manufactured by SEIKO PMC CORPORATION, and the like. Examples of the olefin-based polymer having an epoxy group (excluding isobutene-isoprene copolymers) include "T-YP341" (glycidyl methacrylate-modified propylene-butene random copolymer) manufactured by SEIKO PMC CORPORATION, "T-YP276" (glycidyl methacrylate-modified propylene-butene random copolymer) manufactured by SEIKO PMC CORPORATION, "T-YP313" (glycidyl methacrylate-modified propylene-butene random copolymer) manufactured by SEIKO PMC CORPORATION, and the like.

The content of component (A) in the adhesive composition is preferably not less than 10% by mass, more preferably not less than 20% by mass, further preferably not less than 30% by mass, and preferably not more than 90% by mass, more preferably not more than 85% by mass, further preferably not more than 80% by mass, each with respect to 100 % by mass of the non-volatile components in the adhesive composition, from the aspects of adhesiveness and flexure resistance.

<Component (B)>

The adhesive composition of the present invention contains at least one selected from the group consisting of an alkoxide with a divalent or higher metal (hereinafter sometimes to be simply referred to as "metal") as the central metal (hereinafter sometimes to be referred to as "metal alkoxide"), a carboxylate with a divalent or higher metal as the central metal (hereinafter sometimes to be referred to as "metal carboxylate"), and a chelate compound with a divalent or higher metal as the central metal (hereinafter sometimes to be referred to as "metal chelate compound").

In the present invention, the "metal alkoxide" is a compound containing a structure represented by M-OR (wherein M is a divalent or higher metal, and R is an organic group), and the "metal carboxylate" is a compound containing a structure represented by M-O-(CO)-R (wherein M is a divalent or higher metal, and R is an organic group). The "metal chelate compound" is a compound containing a chelate ring structure formed by the binding of a multidentate ligand to a divalent or higher metal as the central metal. Compounds having a chelate ring structure and a structure represented by M-OR or M-O-(CO)-R are classified as the "metal chelate compound" in the present invention.

A divalent or higher metal is preferably a metal of the group 4 of the periodic table or a metal of the group 13 of the periodic table, more preferably aluminum, titanium or zirconium.

As a multidentate ligand that can be used to form a metal chelate compound, for example, a compound represented by the following formula (a):

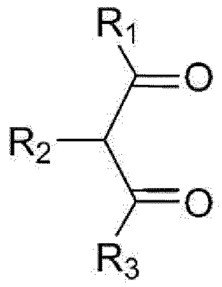

(a)

[in the formula (a), $R_1$, $R_2$, and $R_3$ are as defined in the below-mentioned formula (1)] (hereinafter sometimes to be referred to as "compound (a)") can be mentioned.

Compound (a) is a multidentate ligand before coordinating to the central metal. In the present invention, a multidentate ligand in a coordinated state to the central metal and a multidentate ligand before being coordinated to the

central metal are sometimes referred to as "multidentate ligands" without particular distinction. Examples of the compound represented by the formula (a) are the same as those of the multidentate ligand in the compound represented by the formula (1) to be described below.

Component (B) is preferably a metal complex represented by the following formula (1):

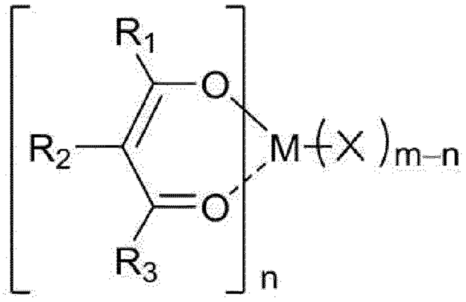

(1)

wherein

M is a metal of divalent or higher,
$R_1$ and $R_3$ are each independently a hydrogen atom, an alkyl group, an alkenyl group, an alkynyl group, an alkoxy group, an alkenyloxy group, an aryl group, or an aralkyl group,
$R_2$ is a hydrogen atom, an alkyl group, an alkenyl group, an alkynyl group, an alkoxy group, an alkenyloxy group, an alkoxycarbonyl group, an aryl group, or an aralkyl group,
X is a monodentate ligand,
a solid line between an oxygen atom (O) and M within the square brackets in the formula (1) shows a covalent bond,
a broken line between an oxygen atom (O) and M within the square brackets in the formula (1) shows a coordinate bond,
m is 3 or 4, n is an integer of 0 to 4, and m≥n (hereinafter sometimes to be abbreviated as "metal complex (1)").
Only one kind of metal complex (1) may be used, or two or more kinds thereof may be used in combination.

In the present specification, examples of the halogen atom include fluorine atom, chlorine atom, bromine atom, and iodine atom.

In the present specification, the alkyl group may be a linear or branched chain. The carbon number of the alkyl group (excluding alkyl group in long chain alkyl(meth)acrylate) is preferably 1 to 20, further preferably 1 to 10, particularly preferably 1 to 6. Examples of the alkyl group include methyl group, ethyl group, propyl group, isopropyl group, butyl group, isobutyl group, sec-butyl group, tert-butyl group, pentyl group, isopentyl group, neopentyl group, 1-ethylpropyl group, hexyl group, isohexyl group, 1,1-dimethylbutyl group, 2,2-dimethylbutyl group, 3,3-dimethylbutyl group, 2-ethylbutyl group, and the like. The alkyl group optionally has substituent(s). Examples of the substituent include halogen atom, hydroxy group, amino group optionally having substituent(s), and the like.

In the present specification, the alkenyl group may be a linear or branched chain. The carbon number of the alkenyl group is preferably 2 to 20. Examples of the alkenyl group include ethenyl group (i.e., vinyl group), 1-propenyl group, 2-propenyl group, 2-methyl-1-propenyl group, 1-butenyl group, 2-butenyl group, 3-butenyl group, 3-methyl-2-butenyl group, 1-pentenyl group, 2-pentenyl group, 3-pentenyl group, 4-pentenyl group, 4-methyl-3-pentenyl group, 1-hexenyl group, 3-hexenyl group, 5-hexenyl group, and the like. The alkenyl group optionally has substituent(s). Examples of the substituent include halogen atom, hydroxy group, amino group optionally having substituent(s), and the like.

In the present specification, the alkynyl group may be a linear or branched chain. The carbon number of the alkynyl group is preferably 2 to 10, more preferably 2 to 6. Examples of the alkynyl group include ethynyl group, 1-propynyl group, 2-propynyl group, 1-butynyl group, 2-butynyl group, 3-butynyl group, 1-pentynyl group, 2-pentynyl group, 3-pentynyl group, 4-pentynyl group, 1-hexynyl group, 2-hexynyl group, 3-hexynyl group, 4-hexynyl group, 5-hexynyl group, 4-methyl-2-pentynyl group, and the like. The alkynyl group optionally has substituent(s). Examples of the substituent include halogen atom, hydroxy group, amino group optionally having substituent(s), and the like.

In the present specification, the carbon number of the aryl group is preferably 6 to 18, more preferably 6 to 14. Examples of the aryl group include phenyl group, 1-naphthyl group, 2-naphthyl group, 1-anthryl group, 2-anthryl group, 9-anthryl group, and the like. The aryl group optionally has substituent(s). Examples of the substituent include halogen atom, hydroxy group, alkyl group optionally having substituent(s), alkenyl group optionally having substituent(s), alkynyl group optionally having substituent(s), amino group optionally having substituent(s), and the like.

In the present specification, the carbon number of the aralkyl group is preferably 7 to 16. Examples of the aralkyl group include benzyl group, phenethyl group, naphthylmethyl group, phenylpropyl group, and the like. The aralkyl group

optionally has substituent(s). Examples of the substituent include halogen atom, hydroxy group, amino group optionally having substituent(s), and the like.

In the present specification, examples of the amino group optionally having substituent(s) include amino group, mono- or di-alkylamino group (e.g., methylamino group, dimethylamino group, ethylamino group, diethylamino group, propylamino group, dibutylamino group), mono- or di-cycloalkylamino group (e.g., cyclopropylamino group, cyclohexylamino group), mono- or diarylamino group (e.g., phenylamino group), mono- or diaralkylamino group (e.g., benzylamino group, dibenzylamino group), heterocyclic amino group (e.g., pyridylamino group), and the like.

In the present specification, the alkyl group in the alkoxy group (i.e., alkyloxy group) is as defined for the aforementioned alkyl group. The alkoxy group optionally has substituent(s). Examples of the substituent include halogen atom, hydroxy group, amino group optionally having substituent(s), and the like.

In the present specification, the alkenyl group in the alkenyloxy group is as defined for the aforementioned alkenyl group. The alkenyloxy group optionally has substituent(s). Examples of the substituent include halogen atom, hydroxy group, amino group optionally having substituent(s), and the like.

In the present specification, the alkyl group in the alkoxycarbonyl group (i.e., alkyloxycarbonyl group) is as defined for the aforementioned alkyl group. The alkoxycarbonyl group optionally has substituent(s). Examples of the substituent include halogen atom, hydroxy group, amino group optionally having substituent(s), and the like.

Examples of the monodentate ligand represented by X include alkoxide anion ($RO^-$) (in the aforementioned formula, R is an organic group), carboxylate anion ($RCOO^-$) (in the aforementioned formula, R is an organic group), oxo (O), and the like.

The alkoxide anion is shown by $RO^-$ (in the aforementioned formula, R is an organic group). The organic group R may be an aliphatic group or an aromatic group. The aliphatic group may be a saturated aliphatic group or an unsaturated aliphatic group. The carbon number of the organic group R is preferably 1 to 20, further preferably 6 to 18, particularly preferably 8 to 14. Examples of the alkoxide anion ($RO^-$) include methoxide, ethoxide, propoxide, isopropoxide, butoxide, isobutoxide, sec-butoxide, tert-butoxide, pentyloxide, hexyloxide, phenoxide, 4-methylphenoxide, and the like.

The carboxylate anion is shown by $RCOO^-$ (in the aforementioned formula, R is an organic group). The organic group R may be an aliphatic group or an aromatic group. The aliphatic group may be a saturated aliphatic group or an unsaturated aliphatic group. The carbon number of the organic group R is preferably 1 to 20, further preferably 6 to 18, particularly preferably 8 to 14. Examples of the carboxylate anion ($RCOO^-$) include a carboxylate anion corresponding to a carboxylic acid such as acetic acid, propionic acid, butanoic acid, pentanoic acid, hexanoic acid, heptanoic acid, octanoic acid, octylic acid, nonanoic acid, decanoic acid, dodecanoic acid, stearic acid, oleic acid, linoleic acid, linolenic acid, arachidonic acid, eicosapentaenoic acid, docosahexaenoic acid, benzoic acid, and the like.

One within the square brackets in the formula represents a multidentate ligand. Examples of the multidentate ligand include acetylacetone, 3-methyl-2,4-pentanedione, acetylacetoaldehyde, 2,4-hexanedione, 2,4-heptanedione, 5-methyl-2,4-hexanedione, 5,5-dimethyl-2,4-hexanedione, benzoylacetone, benzoylacetophenone, salicylaldehyde, 1,1,1-trifluoroacetylacetone, 1,1,1,5,5,5-hexafluoroacetylacetone, 3-methoxy-2,4-pentanedione, 3-cyano-2,4-pentanedione, 3-nitro-2,4-pentanedione, 3-chloro-2,4-pentanedione, acetoacetic acid, methyl acetoacetate, ethyl acetoacetate, propyl acetoacetate, salicylic acid, methyl salicylate, malonic acid, dimethyl malonate, diethyl malonate, and the like. When coordinated to the central metal, the multidentate ligand has a structure in which one or more protons are removed from the ligand.

Specific examples of the metal complex (1) in which M is aluminum include aluminum di(isopropylate) mono(sec-butyrate), aluminum tri(sec-butyrate), aluminum tri(isopropylate), aluminum tri(ethylate), aluminum tris(acetylacetonate), aluminum bis(ethyl acetoacetate) mono(acetylacetonate), aluminum tris(ethyl acetoacetate), aluminum (octadecenyl acetoacetate) di(isopropylate), aluminum (ethyl acetoacetate) di(isopropylate), aluminum (ethyl acetoacetate) di(n-butyrate), aluminum (propyl acetoacetate) di(isopropylate), aluminum (n-butyl acetoacetate) di(isopropylate), aluminum tris(ethyl acetoacetate), aluminum mono(acetylacetonate)bis(ethyl acetoacetate), and aluminum tris(acetylacetonate).

Specific examples of the metal complex (1) in which M is titanium include tetra(isopropyl) titanate, tetra(normal butyl) titanate, tetra(octyl) titanate, tetra(tert-butyl) titanate, tetra(stearyl) titanate, titanium tetra(acetylacetonate), titanium octylene glycolate (alias: bis(2-ethylhexyloxy)bis(2-ethyl-3-oxohexyloxy)titanium(IV)), titanium di(isopropoxide) bis(ethyl acetoacetate), (allyl acetoacetate) tri(isopropoxide), titanium di(normal butoxide) bis(2,4-pentanedionate), titanium di(isopropoxide) bis(tetramethylheptanedionate), titanium di(isopropoxide) bis(ethyl acetoacetate), titanium(IV) tetra(methylphenolate), titanium oxide bis(2,4-pentanedionate), mono(isopropoxy)titanium tri(isostearate), and di(isopropoxy)titanium di(isostearate).

Specific examples of the metal complex (1) in which M is zirconium include zirconium tetra(normal propoxide), zirconium tetra(normal butoxide), zirconium tetra(acetylacetonate), zirconium (allyl acetoacetate) tri(isopropoxide), zirconium di(normal butoxide) bis(2,4-pentanedionate), zirconium di(isopropoxide) bis(2,4-pentanedionate), zirconium di(isopropoxide) bis(tetramethylheptanedionate), zirconium di(isopropoxide) bis(ethyl acetoacetate), zirconium butoxide (acetylacetate) bis(ethyl acetoacetate), zirconium tri(butoxide) mono(acetylacetonate), zirconium octylate, zirconium stearate, tri(normal butoxy)zirconium mono(octylate), and tri(normal butoxy)zirconium mono(stearate).

In one embodiment of the present invention (hereinafter to be referred to as "embodiment (3)"), component (B) is metal complex (1) wherein

M is aluminum, titanium, or zirconium,
one of $R_1$ and $R_3$ is an alkyl group, an alkoxy group, or an alkenyloxy group, and the other is an alkyl group,
$R_2$ is a hydrogen atom,
X is an alkoxide anion or a carboxylate anion, and
m is 3 or 4, n is an integer of 1 to 3, and m>n. In embodiment (3), M is preferably aluminum or zirconium. In embodiment (3), the alkyl group, the alkoxy group, the alkenyloxy group, the alkoxide anion, and the carboxylate anion are as described above (preferred carbon number, examples, and the like).

In one embodiment of the present invention (hereinafter to be referred to as "embodiment (4)"), component (B) is at least one selected from the group consisting of the aforementioned specific examples of metal complex (1) in which M is aluminum, specific examples of metal complex (1) in which M is titanium, and specific examples of metal complex (1) in which M is zirconium. In embodiment (4), component (B) is preferably at least one selected from the group consisting of the aforementioned specific examples of metal complex (1) in which M is aluminum and specific examples of metal complex (1) in which M is zirconium, more preferably aluminum (octadecenyl acetoacetate) di(isopropylate) and/or zirconium tri(butoxy) mono(acetylacetonate) (alias "zirconium tri(butoxide) mono(acetylacetonate)").

The content of component (B) in the adhesive composition is preferably not less than 0.5% by mass, more preferably not less than 1% by mass, and preferably not more than 15% by mass, more preferably not more than 10% by mass, each with respect to 100 % by mass of the non-volatile components in the adhesive composition, from the aspect of flexure resistance.

<Component (C)>

The adhesive composition of the present invention may further contain (C) a liquid polyolefin-based resin and/or a liquid rubber (sometimes to be referred to as "component (C)" in the present specification). The "liquid" in the present invention means that the viscosity at 25°C is not more than 5,000 Pa·s. In the present invention, "the viscosity at 25°C" means a viscosity calculated by multiplying the kinematic viscosity at 25°C, measured by a dynamic viscoelasticity measuring device, by the density. Examples of the dynamic viscoelasticity measuring device include a rheometer (trade name: DISCOVERY HR-2) manufactured by TA Instruments and the like.

In component (C) in the present invention, the "liquid polyolefin-based resin" is an olefin-based polymer that has a viscosity of not more than 5,000 Pa·s at 25°C and cannot form a rubber elastic body by crosslinking, and the "liquid rubber" is a rubber that has a viscosity of not more than 5,000 Pa·s at 25°C and can form a rubber elastic body by crosslinking. For example, liquid polyisoprene can form a rubber elastic body by crosslinking and thus classified as a liquid rubber.

The viscosity of each of the liquid polyolefin-based resin and the liquid rubber at 25°C is preferably 5 to 5,000 Pa·s, more preferably 10 to 4,000 Pa·s, further preferably 20 to 3,000 Pa·s.

The number average molecular weight of the liquid polyolefin-based resin is preferably 500 to 40,000, more preferably 750 to 35,000, further preferably 1,000 to 30,000. The number average molecular weight of the liquid rubber is 500 to 40,000, more preferably 750 to 35,000, further preferably 1,000 to 30,000.

The liquid polyolefin-based resin and/or of the liquid rubber are/is preferably liquid polybutene(s). Liquid polybutene may be a homopolymer (e.g., 1-butene homopolymer, isobutene homopolymer), or a copolymer (e.g., copolymer of 1-butene and isobutene).

As the liquid polyolefin-based resin and/or liquid rubber, commercially available products can be used. Examples of the commercially available product of the liquid polyolefin-based resin include "HV-300" (liquid polybutene) manufactured by ENEOS, "HV-1900" (liquid polybutene) manufactured by ENEOS, "HV-50" (liquid polybutene) manufactured by ENEOS, "HV-35" (liquid polybutene) manufactured by ENEOS, "950MW" (liquid polybutene) manufactured by Kothari, "2400MW" manufactured by Kothari, "H-1900" (liquid polybutene) manufactured by INEOS, "H-6000" (liquid polybutene) manufactured by INEOS, "H-18000" (liquid polybutene) manufactured by INEOS, "200N" (liquid polybutene) manufactured by NOF CORPORATION, "BI-2000" (hydrogenated polybutadiene) manufactured by Nippon Soda Co., Ltd., "BI-3000" (hydrogenated polybutadiene) manufactured by Nippon Soda Co., Ltd., "GI-3000" (hydrogenated polybutadiene) manufactured by Nippon Soda Co., Ltd., "LUCANT LX100" (liquid olefin-based polymer) manufactured by Mitsui Chemicals, Inc., "LUCANT LX400" (liquid olefin-based polymer) manufactured by Mitsui Chemicals, Inc., and the like.

Examples of the commercially available product of the liquid rubber include "Poly bd R-45HT" (butadiene-based liquid rubber) manufactured by Idemitsu Showa Shell, "Poly bd R-15HT" (butadiene-based liquid rubber) manufactured by Idemitsu Showa Shell, "Poly ip" (liquid polyisoprene) manufactured by Idemitsu Showa Shell, "B-1000" (liquid polybutadiene) manufactured by Nippon Soda Co., Ltd., "B-3000" (liquid polybutadiene) manufactured by Nippon Soda Co.,

Ltd., "G-3000" (liquid polybutadiene) manufactured by Nippon Soda Co., Ltd., "LIR-30" (liquid polyisoprene) manufactured by Kuraray Co., Ltd., "LIR-390" (liquid polyisoprene) manufactured by Kuraray Co., Ltd., "LIR-290" (liquid polyisoprene) manufactured by Kuraray Co., Ltd., "LBR-302" (liquid polybutadiene) manufactured by Kuraray Co., Ltd., "LBR-305" (liquid polybutadiene) manufactured by Kuraray Co., Ltd., "LBR-361" (liquid polybutadiene) manufactured by Kuraray Co., Ltd., "L-SBR-820" (liquid styrene-butadiene random copolymer) manufactured by Kuraray Co., Ltd., "Ricon154" (liquid butadiene) manufactured by CRAY VALLEY, "RICON 184" (liquid styrene-butadiene random copolymer) manufactured by CRAY VALLEY, and the like

When component (C) is used, the content thereof in the adhesive composition is preferably not less than 5% by mass, more preferably not less than 10% by mass, further preferably not less than 15% by mass, and preferably not more than 80% by mass, more preferably not more than 70% by mass, further preferably not more than 60% by mass, each with respect to 100 % by mass of the non-volatile components in the adhesive composition, from the aspects of adhesiveness and flexure resistance.

<Other components>

The adhesive composition may contain a component other than component (A) to component (C) (hereinafter sometimes to be referred to as "other component") as long as the effect of the present invention is not inhibited. Examples of other component include curing accelerator, tackifier, inorganic or organic filler, antioxidant, plasticizer, and the like. In each of these, only one kind may be used or two or more kinds thereof may be used in combination.

As other component, a curing accelerator is preferably used. Examples of the curing accelerator include imidazole compound, tertiary/quaternary amine compound, dimethylurea compound, organic phosphine compound, and the like.

Examples of the imidazole compound include 1H-imidazole, 2-methylimidazole, 2-phenyl-4-methylimidazole, 2-ethyl-4-methylimidazole, 1-cyanoethyl-2-ethyl-4-methylimidazole, 2-undecylimidazole, 1-cyanoethyl-2-undecylimidazole, 1-cyanoethyl-2-undecylimidazolium trimellitate, 2-phenyl-4,5-bis(hydroxymethyl)imidazole, 1-benzyl-2-methylimidazole, 1-benzyl-2-phenylimidazole, 2-phenylimidazole, 2-dodecylimidazole, 2-heptadecylimidazole, 1,2-dimethylimidazole, 2-phenyl-4-methyl-5-hydroxymethylimidazole, and the like. Specific examples of the imidazole compound include CUREZOL 2MZ, 2P4MZ, 2E4MZ, 2E4MZ-CN, C11Z, C11Z-CN, C11Z-CNS, C11Z-A, 2PHZ, 1B2MZ, 1B2PZ, 2PZ, C17Z, 1.2DMZ, 2P4MHZ-PW, 2MZ-A, 2MA-OK (all manufactured by SHIKOKU CHEMICALS CORPORATION), and the like.

The tertiary/quaternary amine compound is not particularly limited. Examples thereof include quaternary ammonium salts such as tetramethylammonium bromide, tetrabutylammonium bromide, triethylmethylammonium-2-ethylexanoic acid salt, and the like; diazabicyclo compounds such as DBU (1,8-diazabicyclo[5.4.0]undecene-7), DBN (1,5-diazabicyclo[4.3.0]nonene-5), DBU-phenol salt, DBU-octylic acid salt, DBU-p-toluenesulfonic acid salt, DBU-formic acid salt, DBU-phenolnovolac resin salt, and the like; tertiary amines or salts thereof such as benzyldimethylamine, 2-(dimethylaminomethyl)phenol, 2,4,6-tris(dimethylaminomethyl)phenol (TAP), and the like, dimethylurea compounds such as aromatic dimethylurea, aliphatic dimethylurea, and the like; and the like.

Examples of the dimethylurea compound include aromatic dimethylureas such as DCMU (3-(3,4-dichlorophenyl)-1,1-dimethylurea), U-CAT3512T (manufactured by San-Apro Ltd.), and the like; aliphatic dimethylureas such as U-CAT3503N (manufactured by San-Apro Ltd.), and the like, and the like. Among these, aromatic dimethylurea is preferably used from the aspect of curability.

Examples of the organic phosphine compound include triphenyl phosphine, tetraphenylphosphonium tetra-p-tolylborate, tetraphenylphosphonium tetraphenylborate, tri-tert-butylphosphonium tetraphenylborate, (4-methylphenyl)triphenyl phosphonium thiocyanate, tetraphenylphosphonium thiocyanate, butyltriphenyl phosphonium thiocyanate, triphenyl phosphine triphenyl borane, and the like. Specific examples of the organic phosphine compound include TPP, TPP-MK, TPP-K, TTBuP-K, TPP-SCN, TPP-S (all manufactured by HOKKO CHEMICAL INDUSTRY CO., LTD.), and the like.

When a curing accelerator is used, the content thereof in the adhesive composition is preferably not less than 0.01% by mass, more preferably not less than 0.05% by mass, further preferably not less than 0.1% by mass, and preferably not more than 2% by mass, more preferably not more than 1% by mass, further preferably not more than 0.5% by mass, each with respect to 100% by mass of the non-volatile components in the adhesive composition, for promoted formation of component (A) (i.e., a crosslinked isobutene-based polymer with a long-chain alkyl (meth)acrylate polymer chain) and the like.

[Example]

While the present invention is explained in more detail in the following by referring to Examples, it is not limited by the following Examples. It is also possible to modify the present invention as long as it is compatible to the above-mentioned and the below-mentioned gist, and practice the present invention, all of which are encompassed in the technical scope of the present invention. Unless otherwise indicated, "parts" and "%" in the amounts of components and

copolymerized units respectively mean "parts by mass" and "% by mass".

<Components>

The components used in the Examples and Comparative Examples are as follows.

(1) Materials of component (A) or component (A')

(1-1) Isobutene-based polymer having long-chain alkyl (meth)acrylate polymer chain and epoxy group

"ER869" (manufactured by SEIKO PMC CORPORATION, glycidyl methacrylate-2-ethylhexyl acrylate random copolymer-modified butyl rubber (hereinafter sometimes to be referred to as "GMA+2-EHA-modified IIR"), long-chain alkyl (meth)acrylate unit concentration: 0.067 mmol/g, epoxy group concentration: 1.51 mmol/g, number average molecular weight: 189,000, isobutene unit/isoprene unit: 98.9%/1.1%)
"ER872" (manufactured by SEIKO PMC CORPORATION, glycidyl methacrylate-lauryl methacrylate random copolymer-modified butyl rubber (hereinafter sometimes to be referred to as "GMA+LMA-modified IIR"), long-chain alkyl (meth)acrylate unit concentration: 0.067 mmol/g, epoxy group concentration: 1.51 mmol/g, number average molecular weight: 166,000, isobutene unit/isoprene unit: 98.9%/1.1%)

(1-2) Isobutene-based polymer having long-chain alkyl (meth)acrylate polymer chain and acid anhydride group

"ER669" (manufactured by SEIKO PMC CORPORATION, maleic anhydride-2-ethylhexyl acrylate random copolymer-modified butyl rubber (hereinafter sometimes to be referred to as "MA+2-EHA-modified IIR"), long-chain alkyl (meth)acrylate unit concentration: 0.21 mmol/g, acid anhydride group concentration: 0.43 mmol/g, number average molecular weight: 96,000, isobutene unit/isoprene unit: 98.9%/1.1%)
"ER674" (manufactured by SEIKO PMC CORPORATION, maleic anhydride-lauryl methacrylate random copolymer-modified butyl rubber (hereinafter sometimes to be referred to as "MA+LMA-modified IIR"), long-chain alkyl (meth)acrylate unit concentration: 0.21 mmol/g, acid anhydride group concentration: 0.43 mmol/g, number average molecular weight: 142,900, isobutene unit/isoprene unit: 98.9%/1.1%)

(1-3) Isobutene-based polymer having epoxy group or acid anhydride group

"ER866" (manufactured by SEIKO PMC CORPORATION, glycidyl methacrylate-modified butyl rubber (hereinafter sometimes to be referred to as "GMA-modified IIR"), epoxy group concentration: 1.63 mmol/g, number average molecular weight: 113,000, isobutene unit/isoprene unit: 98.9%/1.1%)
"ER661" (manufactured by SEIKO PMC CORPORATION, maleic anhydride-butyl methacrylate random copolymer-modified butyl rubber (hereinafter sometimes to be referred to as "MA+BMA-modified IIR"), butyl methacrylate unit concentration: 0.32 mmol/g, acid anhydride group concentration: 0.32 mmol/g, number average molecular weight: 40,000, isobutene unit/isoprene unit: 98.9%/1.1%)

(2) Component (B)

"PLENACT AL-M" (manufactured by Ajinomoto Fine-Techno Co., Inc., aluminum chelate compound (aluminum (octadecenyl acetoacetate) di(isopropylate)))
"ORGATIX ZC-540" (manufactured by Matsumoto Fine Chemical Co., Ltd., zirconium chelate compound (zirconium tri(butoxy) mono(acetylacetonate)))

(3) Component (C)

"HV-1900" (manufactured by ENEOS, liquid polybutene, number average molecular weight: 2,900, viscosity

at 25°C: 460 Pa·s)

(4) Other component

"U CAT18X" (manufactured by San-Apro Ltd., curing accelerator)

<Example 1>

A varnish with a mixing ratio shown in the following Table was produced by the following steps, and an adhesive sheet was produced using the obtained varnish. The amount (part) of each component listed in the following Table indicates the non-volatile content of each component in the varnish.

Specifically, glycidyl methacrylate-2-ethylhexyl acrylate random copolymer-modified butyl rubber ("ER869" manufactured by SEIKO PMC CORPORATION), maleic anhydride-2-ethylhexyl acrylate random copolymer-modified butyl rubber ("ER669" manufactured by SEIKO PMC CORPORATION), polybutene ("HV-1900" manufactured by ENEOS), aluminum chelate compound ("PLENACT AL-M" manufactured by Ajinomoto Fine-Techno Co., Inc.), and a curing accelerator ("U CAT18X" manufactured by San-Apro Ltd.) were blended, and the obtained mixture was uniformly dispersed in a high-speed rotary mixer to give an adhesive composition varnish. The obtained varnish was uniformly applied with a die coater to the release-treated surface of a poly(ethylene terephthalate) (PET) film ("SP3000" manufactured by TOYO CLOTH CO., LTD., thickness of PET film: 38 μm) treated with a silicone-based release agent, and heated at 130°C for 30 min to give an adhesive sheet having a 50 um-thick adhesive composition layer.

<Example 2>

By a method similar to that in Example 1 except that the glycidyl methacrylate-2-ethylhexyl acrylate random copolymer-modified butyl rubber ("ER869" manufactured by SEIKO PMC CORPORATION) was changed to a glycidyl methacrylate-lauryl methacrylate random copolymer-modified butyl rubber ("ER872" manufactured by SEIKO PMC CORPORATION), and maleic anhydride-2-ethylhexyl acrylate random copolymer-modified butyl rubber ("ER669" manufactured by SEIKO PMC CORPORATION) was changed to maleic anhydride-lauryl methacrylate random copolymer-modified butyl rubber ("ER674" manufactured by SEIKO PMC CORPORATION), an adhesive composition varnish and an adhesive sheet having a 50 um-thick adhesive composition layer were produced.

<Example 3>

By a method similar to that in Example 1 except that the glycidyl methacrylate-2-ethylhexyl acrylate random copolymer-modified butyl rubber ("ER869" manufactured by SEIKO PMC CORPORATION) was changed to a glycidyl methacrylate-modified butyl rubber ("ER866" manufactured by SEIKO PMC CORPORATION), an adhesive composition varnish and an adhesive sheet having a 50 um-thick adhesive composition layer were produced.

<Example 4>

By a method similar to that in Example 1 except that the maleic anhydride-2-ethylhexyl acrylate random copolymer-modified butyl rubber ("ER669" manufactured by SEIKO PMC CORPORATION) was changed to a maleic anhydride-butyl methacrylate random copolymer-modified butyl rubber ("ER661" manufactured by SEIKO PMC CORPORATION), an adhesive composition varnish and an adhesive sheet having a 50 um-thick adhesive composition layer were produced.

<Example 5>

By a method similar to that in Example 1 except that the aluminum chelate compound ("PLENACT AL-M" manufactured by Ajinomoto Fine-Techno Co., Inc.) was changed to a zirconium chelate compound ("ORGATIX ZC-540" manufactured by Matsumoto Fine Chemical Co., Ltd.), an adhesive composition varnish and an adhesive sheet having a 50 um-thick adhesive composition layer were produced.

<Comparative Example 1>

By a method similar to that in Example 1 except that the glycidyl methacrylate-2-ethylhexyl acrylate random copolymer-modified butyl rubber ("ER869" manufactured by SEIKO PMC CORPORATION) was changed to a glycidyl methacrylate-modified butyl rubber ("ER866" manufactured by SEIKO PMC CORPORATION), and the maleic anhydride-2-ethylhexyl acrylate random copolymer-modified butyl rubber ("ER669" manufactured by SEIKO PMC CORPORATION) was changed to a maleic anhydride-butyl methacrylate random copolymer-modified butyl rubber ("ER661" manufactured by SEIKO PMC CORPORATION), an adhesive composition varnish and an adhesive sheet having a 50 um-thick adhesive composition layer were produced.

In the present specification, the "maleic anhydride-butyl methacrylate random copolymer-modified butyl rubber" is a "butyl rubber having a maleic anhydride-butyl methacrylate random copolymer chain as a side chain". In the present specification, moreover, "a crosslinked polymer in the adhesive composition layer in Comparative Example 1 formed from the glycidyl methacrylate-2-ethylhexyl acrylate random copolymer-modified butyl rubber and the maleic anhydride-butyl methacrylate random copolymer-modified butyl rubber" is denoted as "component (A')", "a constitutional unit derived from butyl methacrylate" is denoted as "a butyl methacrylate unit", and "a polymer chain containing a butyl methacrylate unit" is denoted as "a butyl methacrylate polymer chain".

<Comparative Example 2>

By a method similar to that in Example 1 except that the aluminum chelate compound ("PLENACT AL-M" manufactured by Ajinomoto Fine-Techno Co., Inc.) was not used, an adhesive composition varnish and an adhesive sheet having a 50 um-thick adhesive composition layer were produced.

evaluation method of adhesiveness>

An adhesive sheet using a PET film as a support was cut into a length 50 mm and a width 20 mm. Using a batch vacuum laminator ("Morton-724" manufactured by Nichigo-Morton Co., Ltd.), the adhesive composition layer of the adhesive sheet thus cut was laminated on the PET surface of a composite film provided with aluminum foil and a poly(ethylene terephthalate) (PET) film ("AL1N30 with PET" manufactured by Toyo Tokai Aluminum Hanbai K.K., aluminum foil thickness 30 μm, PET film thickness 25 μm) to prepare a laminate having a laminate structure of "composite film/adhesive composition layer/support (PET film)". Lamination was performed under the conditions of temperature 80°C, time 30 sec, and pressure 0.3 MPa. The support (PET film) was detached from the obtained laminate, and a polyimide film ("UPILEX-S" manufactured by Ube Industries, Ltd., thickness: 50 μm) was laminated on the exposed adhesive composition layer under the same conditions as those mentioned above to give a laminate having a laminate structure of "composite film/adhesive composition layer/polyimide film". The obtained laminate was measured for the adhesive strength (ordinary temperature adhesive strength) when the "composite film/adhesive composition layer" was peeled off from the polyimide film at ordinary temperature in a direction of 180 degrees with respect to the length direction of the PET film of the composite film at a pulling rate of 300 mm/min. In addition, the adhesive strength (high temperature adhesive strength) was measured when a laminate prepared in the same manner as described above was similarly peeled off in an environment of 60°C. The results are shown in Table 1.

The adhesiveness of the adhesive composition at high temperature was evaluated according to the following criteria.

(Adhesiveness at high temperature)

⊙ (extremely good): high temperature adhesive strength is 0.60 kgf/cm or more
○ (good): high temperature adhesive strength is 0.55 kgf/cm or more and less than 0.60 kgf/cm
× (bad): high temperature adhesive strength is less than 0.55 kgf/cm

<Evaluation method of flexure resistance>

An adhesive sheet was folded, and the folded adhesive sheet was punched with a belt punch having a diameter of 8 mm, whereby an evaluation sample with a thickness of about 1.0 mm and a diameter of 8 mm was prepared. The evaluation sample was placed on a DHR parallel plate rheometer, and the shear strain ratio S1 of the evaluation sample at the time when a shear stress of 95 kPa was applied for 5 seconds was measured. Then, the shear strain ratio S2 of the evaluation sample at the time when 60 seconds passed after release of the applied stress was measured.

The strain recovery ratio was calculated from shear strain ratio S1 of the evaluation sample at the time when a shear stress of 95 kPa was applied for 5 seconds and shear strain ratio S2 of the evaluation sample at the time when 60 seconds passed after release of the applied stress, and by the following formula:

$$\text{strain recovery ratio (\%)} = 100 \times (S1-S2)/S1$$

A laminate containing an adhesive composition layer having a good strain recovery ratio can prevent the development of delamination and float even when flexed. Therefore, using the strain recovery ratio, the flexure resistance was evaluated according to the following criteria. The results are shown in Table 1.

(Flexure resistance)

⊙ (extremely good): strain recovery ratio is not less than 95%
○ (good): strain recovery ratio is not less than 90% and less than 95%
× (bad): strain recovery ratio is less than 90%

[Table 1]

| | | Example 1 | Example 2 | Example 3 | Example 4 | Example 5 | Comparative Example 1 | Comparative Example 2 |
|---|---|---|---|---|---|---|---|---|
| materials of component (A) or component (A') | ER869 (GMA+2-EHA-modified IIR) (parts) | 10 | | | 10 | 10 | | 10 |
| | ER872 (GMA+LMA-modified IIR) (parts) | | 10 | | | | | |
| | ER669 (MA+2-EHA-modified IIR) (parts) | 40 | | 40 | | 40 | | 40 |
| | ER674 (MA+LMA-modified IIR) (parts) | | 40 | | | | | |
| | ER866 (GMA-modified IIR) (parts) | | | 10 | | | 10 | |
| | ER661 (MA+BMA-modified IIR) (parts) | | | | 40 | | 40 | |
| component (B) | PLENACT AL-M (aluminum chelate compound) (parts) | 5 | 5 | 5 | 5 | | 5 | |
| | ORGATIX ZC-540 (zirconium chelate compound) (parts) | | | | | 5 | | |
| component (C) | HV-1900 (liquid polybutene) (parts) | 50 | 50 | 50 | 50 | 50 | 50 | 50 |
| other component | U CAT18X (curing accelerator) (parts) | 0.3 | 0.3 | 0.3 | 0.3 | 0.3 | 0.3 | 0.3 |
| concentration of long-chain alkyl (meth) acrylate unit in component (A) or component (A') (mmol/g) | | 0.18 | 0.18 | 0.17 | 0.013 | 0.18 | 0 | 0.18 |
| adhesiveness | ordinary temperature adhesive strength (kgf/cm) | 0.79 | 0.91 | 0.71 | 0.67 | 0.98 | 0.61 | 1.37 |
| | high temperature adhesive strength (kgf/cm) | 0.64 | 0.63 | 0.84 | 0.57 | 0.58 | 0.54 | 0.57 |
| | evaluation of adhesiveness at high temperature | ⊙ | ⊙ | ⊙ | ○ | ○ | × | ○ |

(continued)

| | | Example 1 | Example 2 | Example 3 | Example 4 | Example 5 | Comparative Example 1 | Comparative Example 2 |
|---|---|---|---|---|---|---|---|---|
| flexure resistance | strain recovery ratio (%) | 96 | 90 | 97 | 97 | 96 | 98 | 87 |
| | evaluation of flexure resistance | ⊙ | ○ | ⊙ | ⊙ | ⊙ | ⊙ | × |
| Note: concentration of butyl methacrylate unit in component (A') of Comparative Example 1: 0.26 mmol/g | | | | | | | | |

The adhesive compositions of Examples 1 to 5 containing a crosslinked isobutene-based polymer with a long-chain alkyl (meth)acrylate polymer chain (component (A)), and aluminum or zirconium chelate compound (component (B)) were superior in the adhesiveness at high temperature (adhesive strength at high temperature) and flexure resistance (strain recovery ratio).

On the other hand, the adhesive composition of Comparative Example 1, containing component (A') having a butyl methacrylate polymer chain instead of component (A), was inferior in adhesiveness at high temperature. The adhesive composition of Comparative Example 2 not containing component (B) was inferior in flexure resistance.

[Industrial Applicability]

The adhesive composition and the adhesive sheet of the present invention are useful for the production of flexible electronic devices (particularly the production of a laminate constituting flexible devices).

This application is based on a patent application No. 2020-204467 filed in Japan, the contents of which are incorporated in full herein.

## Claims

1. An adhesive composition comprising

   (A) an isobutene-based polymer having a crosslinked structure formed by a reaction between an epoxy group, and an acid anhydride group and/or a carboxy group, and
   (B) at least one selected from the group consisting of an alkoxide with a divalent or higher metal as the central metal, a carboxylate with a divalent or higher metal as the central metal, and a chelate compound with a divalent or higher metal as the central metal, wherein
   the isobutene-based polymer has, as a side chain, a polymer chain comprising a constitutional unit derived from an alkyl (meth)acrylate with an alkyl group having not less than 6 carbon atoms.

2. The adhesive composition according to claim 1, wherein a concentration of the constitutional unit derived from the alkyl (meth)acrylate with an alkyl group having not less than 6 carbon atoms in the isobutene-based polymer is 0.005 to 5 mmol/g.

3. The adhesive composition according to claim 1 or 2, wherein the isobutene-based polymer is at least one selected from the group consisting of

   (a1) a reaction product of an isobutene-isoprene copolymer having an epoxy group, and an olefin-based polymer having an acid anhydride group and/or a carboxy group, and
   (a2) a reaction product of an isobutene-isoprene copolymer having an acid anhydride group and/or a carboxy group, and an olefin-based polymer having an epoxy group, and
   at least one of the isobutene-isoprene copolymer and the olefin-based polymer has, as a side chain, a polymer chain comprising a constitutional unit derived from an alkyl (meth)acrylate with an alkyl group having not less than 6 carbon atoms.

4. The adhesive composition according to any one of claims 1 to 3, wherein the divalent or higher metal is a metal of group 4 of the periodic table or a metal of group 13 of the periodic table.

5. The adhesive composition according to any one of claims 1 to 3, wherein the divalent or higher metal is aluminum, titanium, or zirconium.

6. The adhesive composition according to any one of claims 1 to 5, further comprising (C) a liquid polyolefin-based resin and/or a liquid rubber.

7. An adhesive sheet having a laminate structure comprising an adhesive composition layer formed from the adhesive composition according to any one of claims 1 to 6, and a support.

## INTERNATIONAL SEARCH REPORT

International application No.
**PCT/JP2021/045244**

**A. CLASSIFICATION OF SUBJECT MATTER**

***C08G 59/42***(2006.01)i; ***C09J 11/06***(2006.01)i; ***C09J 121/00***(2006.01)i; ***C09J 123/22***(2006.01)i; ***C09J 123/26***(2006.01)i; ***C09J 151/04***(2006.01)i; ***C09J 151/06***(2006.01)i; ***C09J 7/38***(2018.01)i
FI: C09J123/22; C09J123/26; C09J121/00; C09J151/04; C09J151/06; C09J11/06; C09J7/38; C08G59/42

According to International Patent Classification (IPC) or to both national classification and IPC

**B. FIELDS SEARCHED**

Minimum documentation searched (classification system followed by classification symbols)

C09J1/00-201/10; C08G59/42

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/189723 A1 (AJINOMOTO KK) 03 October 2019 (2019-10-03) entire text | 1-7 |
| A | WO 2019/012905 A1 (SOKEN KAGAKU KK) 17 January 2019 (2019-01-17) entire text | 1-7 |
| A | WO 2014/084349 A1 (LINTEC CORPORATION) 05 June 2014 (2014-06-05) entire text | 1-7 |
| A | JP 2015-530430 A (3M INNOVATIVE PROPERTIES COMPANY) 15 October 2015 (2015-10-15) entire text | 1-7 |
| A | WO 2019/021843 A1 (OTSUKA CHEMICAL CO LTD) 31 January 2019 (2019-01-31) entire text | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 February 2022** | **01 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/045244**

| Patent document cited in search report | Publication date (day/month/year) | Patent family member(s) | Publication date (day/month/year) |
|---|---|---|---|
| WO 2019/189723 A1 | 03 October 2019 | CN 111868162 A<br>KR 10-2020-0138344 A | |
| WO 2019/012905 A1 | 17 January 2019 | TW 201908389 A | |
| WO 2014/084349 A1 | 05 June 2014 | US 2015/0299524 A1<br>entire text<br>EP 2927298 A1<br>CN 104812863 A<br>KR 10-2015-0092186 A | |
| JP 2015-530430 A | 15 October 2015 | US 2015/0166854 A1<br>entire text<br>WO 2014/028356 A1<br>KR 10-2015-0043408 A<br>CN 104603221 A | |
| WO 2019/021843 A1 | 31 January 2019 | CN 110662813 A<br>KR 10-2020-0031070 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019189723 A
- JP 2020204467 A